# EUROPEAN PATENT APPLICATION

(11) **EP 4 644 883 A1**
(43) Date of publication of application: **05.11.2025**
(21) Application number: 23910490.4
(22) Date of filing: 25.12.2023
(51) Int. Cl.: G01N 23/04

(54) **SECURITY INSPECTION SYSTEM**

(30) Priority: 28.12.2022 CN 202211698326
(71) Applicant: NUCTECH COMPANY LIMITED, Beijing 100084 (CN); Nuctech (Beijing) Company Limited, Beijing 101500 (CN)
(72) Inventor: LIU, Lei, Beijing 100084 (CN); ZONG, Chunguang, Beijing 100084 (CN); YU, Weifeng, Beijing 100084 (CN); CHI, Haojie, Beijing 100084 (CN); JI, Zheng, Beijing 100084 (CN); LI, Tianyu, Beijing 100084 (CN)
(74) Representative: Gunzelmann, Rainer
(86) International application number: PCT/CN2023/141535
(87) International publication number: WO 2024/140564

(57) **Abstract**

The present disclosure provides a security inspection system. The system comprises: a movable carrier; a bearing device detachably arranged on the movable carrier and arranged on one side of the movable carrier in the first direction after the bearing device is detached from the movable carrier, so that an inspection passage through which an object to be inspected passes is provided on one side of the movable carrier; a scanning system configured to scan and detect the object to be inspected passing through the inspection passage, and including a first scanning device, wherein the first scanning device comprises a first radiation source and a first transmission detector cooperating with each other, one of the first radiation source and the first transmission detector is arranged on the movable carrier, and the other is arranged on the bearing device; and a connection device configured to connect the movable carrier and the bearing device arranged on one side of the movable carrier in a first direction after the bearing device is detached from the movable carrier, so that the first radiation source and the first transmission detector are coplanar with each other. In this way, it is possible to improve the detection accuracy.

## Description

### CROSS-REFERENCE TO RELATED APPLICATIONS

The present disclosure is based on and claims priority to China Patent Application No. 202211698326.7 filed on December 28, 2022, the disclosure of which is incorporated by reference herein in its entirety.

### TECHNICAL FIELD

The present disclosure relates to the field of security inspection technology, in particular to a security inspection system.

### BACKGROUND

In some security inspection systems, one of its radiation source and transmission detector is integrated on a movable carrier, and the other is integrated on a bearing device. During the transport process, the bearing device is located on the movable carrier and moves along with the movable carrier. After arriving at an inspection site, the bearing device leaves the movable carrier and moves to one side of the movable carrier in the first direction, so that the transmission detector is opposite to the radiation source, and the object to be inspected is scanned to obtain a scanned image, so as to determine whether there is contraband on the object to be inspected.
In the related art, the relative position relationship between the bearing device and the movable carrier after the bearing device leaves the movable carrier depends entirely on the respective positioning of the bearing device and the movable carrier. In this case, it is difficult to accurately position the bearing device and the movable carrier, so that it is likely to result in that the radiation source and the transmission detector are not coplanar, thereby affecting the accuracy of the inspection result.

### SUMMARY

One technical problem to be solved by the present disclosure is: to improve the detection accuracy of the security inspection system.

In order to solve the above-described technical problem, the present disclosure provides a security inspection system. The system comprises: a movable carrier; a bearing device detachably arranged on the movable carrier and arranged on one side of the movable carrier in the first direction after the bearing device is detached from the movable carrier, so that an inspection passage through which an object to be inspected passes is provided on one side of the movable carrier; a scanning system configured to scan and detect the object to be inspected passing through the inspection passage, and including a first scanning device, wherein the first scanning device includes a first radiation source and a first transmission detector cooperating with each other, one of the first radiation source and the first transmission detector is arranged on the movable carrier, and the other is arranged on the bearing device; and a connection device configured to connect the movable carrier and the bearing device arranged on one side of the movable carrier in a first direction after the bearing device is detached from the movable carrier, so that the first radiation source and the first transmission detector are coplanar with each other.

In some embodiments, the connection device includes a first connector and a second connector arranged side by side and both connecting the bearing device with the movable carrier.

In some embodiments, the first connector and the second connector are telescopic.

In some embodiments, the first connector and/or the second connector include(s) an automatic telescopic member or a manual telescopic member.

In some embodiments, the first connector and/or the second connector include(s) a hydraulic rod or a threaded telescopic rod.

In some embodiments, the connection device includes a third connector connected between the first connector and the second connector.

In some embodiments, the third connector includes a cross bar connected between the first connector and the second connector so that the connection device is H-shaped.

In some embodiments, the connection device is detachably arranged on the bearing device or the movable carrier.

In some embodiments, the first transmission detector includes at least one of a first transmission detection portion and a second transmission detection portion, the first transmission detection portion is located on the other side of the object to be inspected opposite to the radiation source during the process of scanning and detecting the object to be inspected by the first scanning device, and the second transmission detection portion is located below the object to be inspected during the process of scanning and detecting the object to be inspected by the first scanning device.

In some embodiments, the first transmission detection portion is rotatably provided, so that the first transmission detection portion has a deployed state and a retracted state, such that when in the deployed state, the first transmission detection portion is located on the other side of the object to be inspected opposite to the first radiation source; and/or the length of the first transmission detection portion is adjustable.

In some embodiments, the first transmission detection portion includes at least two detection sections telescopically or foldably connected so that the length of the first transmission detection portion is adjustable.

In some embodiments, the bearing device includes a base and a ramp, the first radiation source or the first transmission detector, when arranged on the bearing device is arranged on the base, the ramp is arranged on the edge of the base along a second direction of the movable carrier to guide the object to be inspected to ascend and descend the base, where the second direction is perpendicular to the first direction.

In some embodiments, the ramp is rotatably arranged on the base so that the ramp has a deployed state and a retracted state.

In some embodiments, the ramps are provided on the two opposite sides of the base along the second direction of the movable carrier; and/or the at least two ramps are provided on one side of the base along the second direction of the movable carrier.

In some embodiments, the bearing device is provided with a leg extended and supported on the ground to raise the bearing device when the bearing device is required to be detached from the movable carrier; and/or the bearing device is provided with a support, so that wheels for contacting with the ground are provided at the bottom of the support.

In some embodiments, the support is detachably connected with the bearing device.

In some embodiments, the first scanning device includes a first backscatter detector cooperating with the first radiation source, and the first backscatter detector and the first radiation source are arranged on the same of the movable carrier and the bearing device.

In some embodiments, the scanning system includes a second scanning device including a second radiation source and further including at least one of a second transmission detector and a second backscatter detector cooperating with the second radiation source, the second radiation source and the first transmission detector are arranged on the same of the movable carrier and the bearing device, the second transmission detector and the first radiation source are arranged on the same of the movable carrier and the bearing device, and the second backscatter detector and the first transmission detector are arranged on the same of the movable carrier and the bearing device; and/or, the scanning system includes a third scanning device arranged on the bearing device and including a third radiation source and a third backscatter detector cooperating with each other, wherein the third radiation source and the third backscatter detector are located below the object to be inspected during the process of scanning and detecting the object to be inspected by the third scanning device.

In some embodiments, the security inspection system includes the two bearing devices and the two scanning systems, the two bearing devices are arranged on the two opposite sides of the movable carrier in the first direction after the two bearing devices are detached from the movable carrier, so that the inspection passages are provided on the two opposite sides of the movable carrier in the first direction, the two scanning systems are in one-to-one correspondence with the two bearing devices, and at least one of the two bearing devices is connected with the movable carrier through the connection device after it is detached from the movable carrier.

In some embodiments, after the two bearing devices are detached from the movable carrier, the two bearing devices are both connected with the movable carrier through the two connection devices, and the two connection devices connected with the two bearing devices respectively are opposite to each other or staggered along the second direction of the movable carrier perpendicular to the first direction.

The connection device additionally provided may connect the bearing device and the movable carrier after the bearing device leaves the movable carrier, so as to realize a physical connection between the bearing device and the movable carrier, so that the first radiation source is coplanar with the first transmission detector. In this way, it is possible to effectively improve the positioning accuracy of the bearing device and the movable carrier, thereby enhancing the detection accuracy.

Other features and advantages of the present disclosure will become apparent from the following detailed description of exemplary embodiments of the present disclosure with reference to the accompanying drawings.

### BRIEF DESCRIPTION OF THE DRAWINGS

In order to more explicitly explain the technical solutions in the embodiments of the present disclosure or the relevant art, the accompanying drawings required to be used in the description of the embodiments or the relevant art will be briefly introduced below. Obviously, the accompanying drawings described below are merely some of the embodiments of the present disclosure. For those of ordinary skill in the art, other accompanying drawings may also be obtained according to these accompanying drawings on the premise that no inventive effort is involved.
Fig. 1 is a schematic structural view of an image forming system during a transit transport process in a first embodiment of the present disclosure.
Fig. 2 is a schematic view of the state of the image forming system when the legs are supported on the ground in the first embodiment of the present disclosure.
Fig. 3 is a schematic view of the state of the image forming system when the bearing device leaves the movable carrier in the first embodiment of the present disclosure.
Fig. 4 is a schematic view of the state of the image forming system during the detection process in the first embodiment of the present disclosure.
Fig. 5 is a schematic view of the layout of the scanning system of the image forming system in the first embodiment of the present disclosure.
Fig. 6 is a schematic structural view of the tractor in the first embodiment of the present disclosure.
Fig. 7 is a schematic view of a combination of the bearing device, the first transmission detector and the support in the first embodiment of the present disclosure.
Fig. 8 is a schematic view of the state of the image forming system when the connection device is connected to the tractor in the first embodiment of the present disclosure.
Fig. 9 is a schematic view of the state of the image forming system when the connection device is connected to the tractor and the bearing device in the first embodiment of the present disclosure.
Fig. 10 is a schematic view of the state of the image forming system when the first transmission detector is deployed in the first embodiment of the present disclosure.
Fig. 11 is a schematic view of the state of the image forming system during the detection process in the second embodiment of the present disclosure.
Fig. 12 is a schematic view of the layout of the scanning system of the image forming system in the third embodiment of the present disclosure.
Fig. 13 is a schematic view of the state of the image forming system during the detection process in the fourth embodiment of the present disclosure.
Fig. 14 is a schematic view of the layout of the third scanning device in the base in the fourth embodiment of the present disclosure.
Fig. 15 is a schematic view of the layout of the scanning system of the image forming system in the fifth embodiment of the present disclosure.

### Description of reference numerals:

10. security inspection system;
1. movable carrier; 11. tractor; 12. semi-trailer;
2. bearing device; 21. base; 22. ramp; 23. leg; 24. support; 25. wheel; 26. inspection passage;
27. baffle plate;
3. scanning system;
4. first scanning device; 41. first radiation source; 42. first transmission detector; 43. first transmission detection portion; 44. detection section; 45. second transmission detection portion; 46. first backscatter detector;
5. second scanning device; 51. second radiation source; 52. second transmission detector;
53. second backscatter detector;
6. third scanning device; 61. third radiation source; 62. third backscatter detector;
7. shield compartment;
8. connection device; 81. first connector; 82. second connector; 83. third connector; 84. cross bar; 85. connecting rod; 86. automatic telescopic member; 87. manual telescopic member; 88. hydraulic rod; 89. threaded telescopic rod;
W. first direction; L. second direction.

### DETAILED DESCRIPTION

The technical solutions in the embodiments of the present disclosure will be explicitly and completely described below in conjunction with the accompanying drawings in the embodiments of the present disclosure. Apparently, the embodiments described are merely some of the embodiments of the present disclosure, rather than all of the embodiments. The following descriptions of at least one exemplary embodiment which are in fact merely illustrative, shall by no means serve as any delimitation on the present disclosure as well as its application or use. On the basis of the embodiments of the present disclosure, all the other embodiments obtained by those skilled in the art on the premise that no inventive effort is involved shall fall into the protection scope of the present disclosure.

The techniques, methods, and devices known to those of ordinary skill in the relevant art might not be discussed in detail. However, the techniques, methods, and devices shall be considered as part of the specification where appropriate.

In the description of the present disclosure, it is necessary to understand that, such wordings as "first" and "second" which are used to define the parts, are only intended to facilitate distinguishing the corresponding parts. Unless otherwise specified, the aforementioned wordings do not have particular meanings, and thus cannot be understood as limiting the protection scope of the present disclosure.

Further, the technical features involved in different embodiments of the present disclosure described below may be combined with each other as long as they do not constitute a conflict with each other.

The security inspection system is a device to scan and inspect an object to be inspected such as a movable carrier, a container and an airplane in occasions such as customs and airports so as to obtain an image.

In order to improve the working flexibility, some security inspection systems are constructed to be movable. For example, some security inspection systems include a movable carrier, a bearing device, a radiation source and a transmission detector, wherein the movable carrier may travel between different places, the bearing device is arranged on the movable carrier, one of the radiation source and the transmission detector is arranged on the movable carrier, and the other is arranged on the bearing device, so that the radiation source, the transmission detector and the bearing device may all move together with the movable carrier and flexibly transfer between different places, and the bearing device may also be detached from the movable carrier. In this way, after arriving at the inspection site, the bearing device may leave the movable carrier, and reach one side of the movable carrier in the first direction so as to be positioned at the position where the radiation source is opposite to the transmission detector, so that the transmission detector may receive the radiation emitted by the radiation source and passing through the object to be inspected, and finally obtain a scanned image as a basis for judging whether there is contraband on the object to be inspected, so as to realize the security inspection of the object to be inspected.

For the above-described mobile security inspection system, after arriving at the inspection site, how to quickly and accurately locate the detached bearing device and the movable carrier is a difficult problem.

In the related art, after the bearing device leaves the movable carrier, there is no physical connection between the bearing device and the movable carrier, and the relative position relationship between the bearing device and the movable carrier depends entirely on the respective positioning of the bearing device and the movable carrier. In this case, it is time-consuming, and the positioning accuracy is low, so that it is likely to lead to the phenomenon that the bearing device and the movable carrier are not accurately positioned, and the phenomenon that the radiation source and the transmission detector are not coplanar, which affects the detection accuracy. For example, in some solutions, the movable carrier and the bearing device leaving the movable carrier move on their owns respectively, and the position of the tire of the movable carrier is detected by depending on an optical sensor arranged on the bearing device, for example, to determine whether the bearing device has reached the target position. In this case, since the tire might be skewed, the tire pressure might also be inaccurate. Therefore, even if the tire is detected, it cannot be accurately indicated that the movable carrier and the bearing device indeed have been in place, and it is very likely that they are not in place, and the radiation source and the transmission detector are not coplanar, which results in that the radiation detection result is inaccurate. In addition, since it is necessary to provide other detection devices (for example, the above-described optical sensor), it is also possible to lead to increased control difficulty and cost.

Regarding the above-described circumstances, the present disclosure improves the structure of the security inspection system.

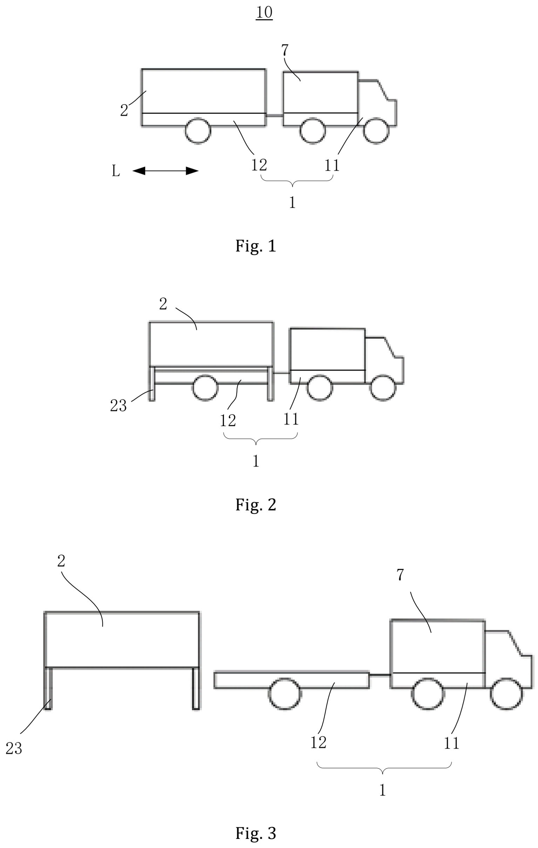

Figs. 1 to 15 exemplarily show the structure of the security inspection system in the present disclosure.

Referring to Figs. 1 to 15, the security inspection system 10 provided by the present disclosure comprises a movable carrier 1, a bearing device 2, a scanning system 3 and a connection device 8. The bearing device 2 is detachably arranged on the movable carrier 1, and arranged on one side of the movable carrier 1 in the first direction W, so that inspection passage 26 through which the object to be inspected passes is provided on one side of the movable carrier 1 after the bearing device 2 is detached from the movable carrier 1. The scanning system 3 is configured to scan and detect the object to be inspected passing through the inspection passage 26, and includes a first scanning device 4. The first scanning device 4 includes a first radiation source 41 and a first transmission detector 42 cooperating with each other. One of the first radiation source 41 and the first transmission detector 42 is arranged on the movable carrier 1, while the other is arranged on the bearing device 2. The connection device 8 is configured to connect the movable carrier 1 and the bearing device 2 arranged on one side of the movable carrier 1 in the first direction W, so that the first radiation source 41 and the first transmission detector 42 are coplanar with each other after the bearing device 2 is detached from the movable carrier 1.

In the above-described solution, since the connection device 8 may connect the bearing device 2 and the movable carrier 1 after the bearing device 2 leaves the movable carrier 1, a physical connection between the bearing device 2 and the movable carrier 1 is realized, so that the first radiation source 41 is coplanar with the first transmission detector 42, specifically, so that the beam plane (for example, the fan beam plane or the pencil beam plane) of the first radiation source 41 is coplanar with the center line of the detection plane of the first transmission detector 42. Therefore, it is possible to effectively improve the positioning accuracy of the bearing device 2 and the movable carrier 1, and prevent that the detection accuracy is affected due to the inaccurate positioning of the bearing device 2 and the movable carrier 1. Moreover, in this case, the first transmission detector 42 even when only including a row of detector crystals may also detect the radiation passing through the object to be inspected. Therefore, it is also conductive to reducing the width of the first transmission detector 42, so that it is possible to use a transmission detector with a small width and reduce the cost.

Moreover, based on the connection device 8, it is only necessary to determine a connection position where the first radiation source 41 is coplanar with the first transmission detector 42 in advance, and then directly connect the connection device 8 to the predetermined connection position during every use. That is, it is possible to accomplish the rapid and accurate arrangement of the security inspection system 10 at the inspection site without performing coplanar adjustment every time. Therefore, it is conductive to simplifying the operation and saving the time, which improves the site arrangement efficiency of the security inspection system 10, and realizes the rapid deployment of the security inspection system 10.

It may be seen that, a connection device 8 is provided so that the movable carrier 1 is connected with the bearing device 2 arranged on one side of the movable carrier 1 in the first direction W, which is conductive to improving the detection accuracy and the site arrangement efficiency of the security inspection system 10.

As an example of the connection device 8, referring to Figs. 1 to 15, in some embodiments, the connection device 8 includes a first connector 81 and a second connector 82, which are arranged side by side and both connect the bearing device 2 and the movable carrier 1. In this way, an accurate physical connection between the movable carrier 1 and the bearing device 2 arranged on one side of the movable carrier 1 in the first direction W may be realized based on a simple structure, so that the first radiation source 41 is precisely coplanar with the first transmission detector 42.

Wherein, the first connector 81 and the second connector 82 may have various structural forms. For example, in some embodiments, the first connector 81 and the second connector 82 are not telescopic. For another example, in other embodiments, the first connector 81 and the second connector 82 are telescopic. At this time, the connection device 8 may not only realize a physical connection between the movable carrier 1 and the bearing device 2 arranged on one side of the movable carrier 1 in the first direction W, so that the first radiation source 41 is coplanar with the first transmission detector 42, but also flexibly adjust the distance between the movable carrier 1 and the bearing device 2 in the first direction W to meet different detection requirements. For example, the first connector 81 and the second connector 82 are telescopic to change a distance between the movable carrier 1 and the bearing device 2, which may flexibly meet the detection requirements of the objects to be inspected with different widths, facilitate the smooth passage of the objects to be inspected with different widths, and obtain images that meet the requirements.

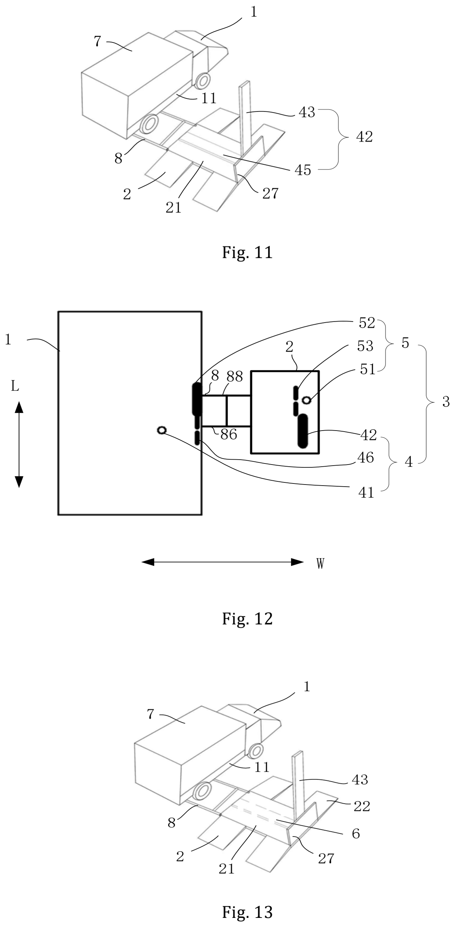

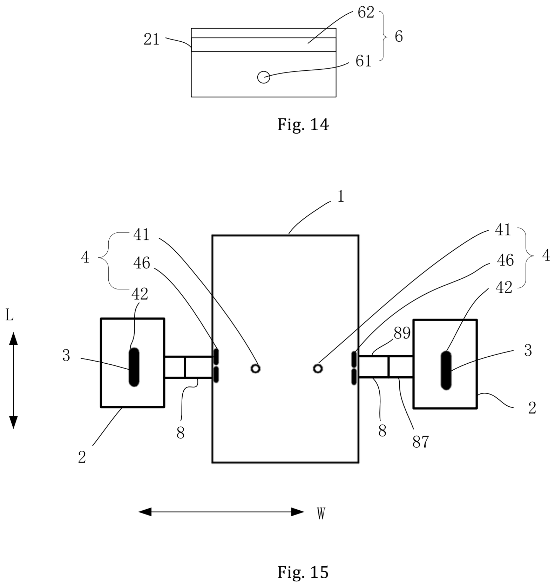

When the first connector 81 and the second connector 82 are telescopic, referring to Figs. 12 and 15, the first connector 81 and/or the second connector 82 may include an automatic telescopic member 86 (for example, a hydraulic rod 88) or a manual telescopic member 87 (for example, a threaded telescopic rod 89), to conveniently realize that the first connector 81 and the second connector 82 are telescopic, so that the lengths of the first connector 81 and the second connector 82 may be changed to flexibly meet the detection requirements of the objects to be inspected with different widths.

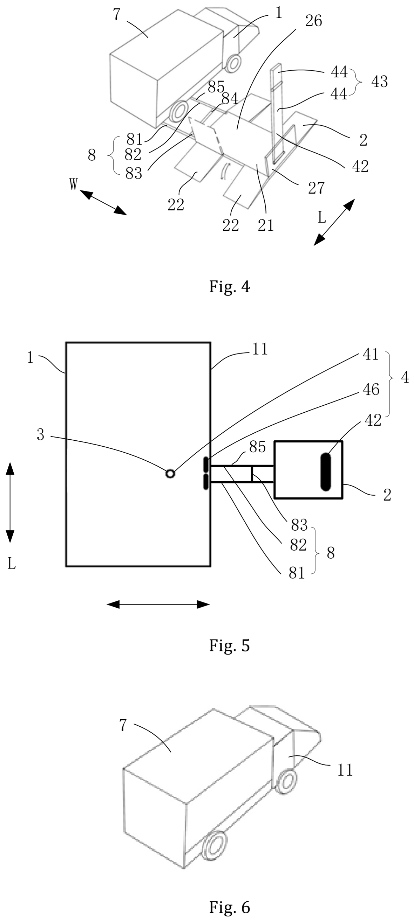

Referring to Figs. 4 and 5, in some embodiments, the connection device 8 includes not only a first connector 81 and a second connector 82, but also a third connector 83 at the same time. The third connector 83 is connected between the first connector 81 and the second connector 82, which is conductive to further improving the structural stability of the connection device 8 and allowing the connection device 8 to enable that the first radiation source 41 is coplanar with the first transmission detector 42 more accurately.

As an example of the third connector 83, referring to Figs. 4 and 5, in some embodiments, the third connector 83 includes a cross bar 84 connected between the first connector 81 and the second connector 82, so that the connection device 8 is H-shaped. At this time, the connection device 8 has a simple structure and a favorable stability. Of course, the structure of the third connector 83 is not limited thereto. For example, in other embodiments, the third connector 83 includes two rods crossing with each other. In this case, the third connector 83 may further enhance the structural stability of the connection device 8.

In the aforementioned embodiments, the connection device 8 may be arranged on the bearing device 2 or the movable carrier 1, so that the connection device 8 may move together with the movable carrier 1 during the transit transport process, so as to be convenient in use and less prone to lose. Moreover, in some embodiments, the connection device 8 may be detachably arranged on the bearing device 2 or the movable carrier 1, so that the connection device 8 may be placed on the bearing device 2 or the movable carrier 1 during the transit transport process. When reaching the detection site, the connection device 8 may be discharged to connect the bearing device 2 and the movable carrier 1. Alternatively, in other embodiments, the connection device 8 may also be non-detachably arranged on the bearing device 2 or the movable carrier 1. This solution is especially suitable for the case that the connection device 8 is telescopic. This is because, when the connection device 8 is telescopic, the connection device 8 may shrink to a state that does not affect the transport during the transit transport process. After reaching the detection site, when it is necessary to connect the bearing device 2 and the movable carrier 1, the connection device 8 is extended to connect the bearing device 2 and the movable carrier 1. During the whole process, there is no need to discharge the connection device 8, so that the operation is simple.

The connection device 8 may be connected with the movable carrier 1 and the bearing device 2 in multiple methods. For example, in some embodiments, the movable carrier 1 and the bearing device 2 are provided with connecting holes, so that fasteners and the like pass through the connection device 8 and the connecting holes of the movable carrier 1 and the bearing device 2 to realize the connection of the connection device 8 with the movable carrier 1 and the bearing device 2. Moreover, in some embodiments, the movable carrier 1 and/or the bearing device 2 are/is further provided with chutes, to guide the connection device 8 to smoothly reach the connecting holes on the movable carrier 1 and/or the bearing device 2 for connection, so as to further reduce the connection difficulty and improve the connection efficiency. For example, in some embodiments, the movable carrier 1 is provided with a chute extending along the second direction L (the second direction L is perpendicular to the first direction W), so that the chute is provided with a recess in which the connecting hole on the movable carrier 1 is arranged. In this way, when the connection device 8 is connected to the movable carrier 1, the connection device 8 may be first placed into the chute, and then the connection device 8 may slide along the chute to the recess by sliding the connection device 8 or moving the movable carrier 1. The hole on the connection device 8 is aligned with the hole in the recess, and then the fastener passes through the connecting hole on the movable carrier 1 and the hole on the connection device 8 to complete the connection between the connection device 8 and the movable carrier 1. During a corresponding process, since the connection device 8 may automatically find the position of the connecting hole on the movable carrier 1 under the guidance of the chute without repeated manual adjustment, the difficulty is lower and the efficiency is higher.

As an example of the first transmission detector 42 in the aforementioned embodiments, refer to Figs. 1 to 11. In some embodiments, the first transmission detector 42 includes at least one of a first transmission detection portion 43 and a second transmission detection portion 45. The first transmission detection portion 43 is located on the other side of the object to be inspected opposite to the radiation source 41 during the process of scanning and detecting the object to be inspected by the first scanning device 4, and the second transmission detection portion 45 is located below the object to be inspected during the process of scanning and detecting the object to be inspected by the first scanning device 4.

The first transmission detection portion 43 may cooperate with the first radiation source 41 to obtain the transmission radiation passing through the object to be inspected from a lateral surface. The second transmission detection portion 45 may also cooperate with the first radiation source 41 to obtain the transmission radiation passing through the object to be inspected from the bottom. When the first transmission detector 42 includes the first transmission detection portion 43 and the second transmission detection portion 45 at the same time, it is possible to obtain the transmission radiation passing through the object to be inspected from a lateral surface and from the bottom at the same time, which is convenient to realize a more omni-directional examination of the object to be inspected.

When the first transmission detector 42 includes the first transmission detection portion 43, referring to Figs. 1 to 11, in some embodiments, the first transmission detection portion 43 is rotatably arranged, so that the first transmission detection portion 43 has a deployed state and a retracted state. When in the deployed state, the first transmission detection portion 43 is located on the other side of the object to be inspected opposite to the first radiation source 41. In this way, when detection is not required, the first transmission detection portion 43 may remain in a retracted state to facilitate the transport. When detection is required, the first transmission detection portion 43 may be rotated so that the first transmission detection portion 43 is switched from a retracted state to an extended state, so as to cooperate with the first radiation source 41 for transmission scanning. It may be seen that, the first transmission detection portion 43 is provided to rotate so as to flexibly meet different requirements during the transport and detection process.

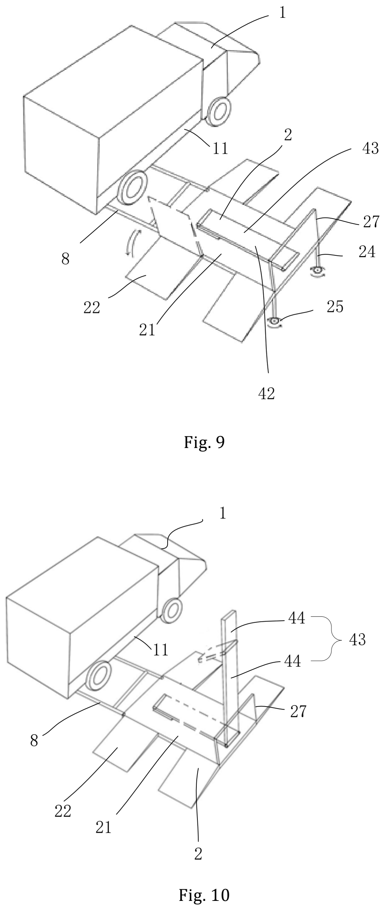

In addition, when the first transmission detector 42 includes a first transmission detection portion 43, referring to Figs. 1 to 10, in some embodiments, the length of the first transmission detection portion 43 may be adjusted. For example, referring to Fig. 10, in some embodiments, the first transmission detection portion 43 includes at least two detection sections 44, which are telescopically or foldably connected so that the length of the first transmission detection portion 43 may be adjusted. In this way, the first transmission detection portion 43 may be adjusted to different lengths for the objects to be inspected with different heights, so as to flexibly meet the detection requirements of the objects to be inspected with different heights. Moreover, the length of the first transmission detection portion 43 may be adjusted, which is also conductive to reducing the length during the transport process and facilitating the transit transport. In addition, in some embodiments, during the detection, at least some detection sections 44 above the first transmission detection portion 43 may be folded to be perpendicular to other detection sections 44 vertically placed to form an L-shaped structure.

As an example of the bearing device 2 in the aforementioned embodiments, referring to Figs. 4 to 10, in some embodiments, the bearing device 2 includes a base 21 and a ramp 22. One of the first radiation source 41 and the first transmission detector 42 arranged on the bearing device 2 is arranged on the base 21, and the ramp 22 is arranged on the edge of the base 21 along the second direction L of the movable carrier 1 to guide the object to be inspected to ascend and descend the base 21. In this way, the base 21 serves as the inspection passage 26 during the detection process. Since the base 21 is provided with the ramp 22 for guiding the object to be inspected to ascend and descend the base 21, the object to be inspected may easily reach or leave the base 21, which is conductive to improving the detection efficiency.

Referring to Fig. 4, in some embodiments, the ramp 22 is rotatably arranged on the base 21, so that the ramp 22 has a deployed state and a retracted state. In this way, when inspection is not required, the ramp 22 may remain in a retracted state to facilitate the transport. When inspection is required, the ramp 22 is rotated so that the ramp 22 is switched from the retracted state to the deployed state, so as to guide the object to be inspected to ascend and descend the base 21. It may be seen that, the ramp 22 is provided to be rotatable so as to flexibly meet different requirements during the transport and inspection process.

Continuing to refer to Fig. 4, in some embodiments, ramps 22 are provided on the two opposite sides of the base 21 along the second direction L of the movable carrier 1; and/or, at least two ramps 22 are provided on one side of the base 21 along the second direction L of the movable carrier 1. In this way, the base 21 is provided with more than one ramp 22, which is convenient to guide the object to be inspected to ascend and descend more stably.

Returning to Fig. 2 and Fig. 3, in some embodiments, the bearing device 2 is provided with legs 23. When the bearing device 2 is required to be detached from the movable carrier 1, the legs 23 are supported on the ground by extension so as to raise the bearing device 2. Thus, referring to Figs. 2 and 3, when the bearing device 2 needs to leave the movable carrier 1, the legs 23 may be supported on the ground by extension so as to raise the bearing device 2. Then, it is only necessary to drive the movable carrier 1 away so as to implement that the bearing device 2 is detached from the movable carrier 1, which is simple and convenient. It may be seen that, the legs 23 are provided so that the bearing device 2 has a spontaneous loading and unloading function, which is conducive to further improving the site arrangement efficiency of the security inspection system 10 and realizing faster site deployment of the security inspection system 10.

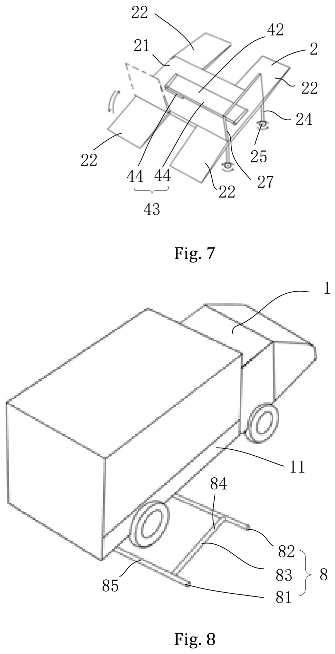

In addition, referring to Fig. 7, in some embodiments, the bearing device 2 is provided with a support 24, and a wheel 25 for contacting with the ground is arranged at the bottom of the support 24. Based on this, when the bearing device 2 is detached from the movable carrier 1 and needs to reach a target position, the support 24 may be used to support the bearing device 2, and the wheel 25 may be supported on the ground to reduce the movement resistance of the bearing device 2. In this way, the bearing device 2 may be pushed to reach a target position quickly, which is also conducive to further improving the site arrangement efficiency of the security inspection system 10.

Specifically, referring to Figs. 9 and 10, in some embodiments, the support 24 is detachably connected with the bearing device 2. In this way, the support 24 may support the bearing device 2 only before the bearing device 2 leaves the movable carrier 1 and the connection device 8 connects the bearing device 2 with the movable carrier 1. After the connection device 8 connects the bearing device 2 with the movable carrier 1, the support 24 may be removed so that the bearing device 2 may fall to the ground so as to realize a more stable detection process.

Returning to Fig. 5, as an example of the first scanning device 4 in the aforementioned embodiments, the first scanning device 4 includes not only a first radiation source 41 and a first transmission detector 42, but also a first backscatter detector 46 cooperating with the first radiation source 41, and the first backscatter detector 46 and the first radiation source 41 are arranged on the same of the vehicle 1 and the bearing device 2. In this way, the first scanning device 4 may not only perform transmission scanning on the object to be inspected, but also perform backscatter scanning on the object to be inspected, which is conductive to further improving the detection accuracy and obtaining a more comprehensive and reliable detection result. At this time, the first radiation source 41 is a radiation source capable of emitting radiation for backscatter scanning the object to be inspected. The first backscatter detector 46 may be provided with a slit through which the radiation of the first radiation source 41 passes.

In addition, as a further improvement of the aforementioned embodiments, referring to Figs. 12 to 14, in some embodiments, the scanning system 3 includes not only a first scanning device 4, but also at least one of a second scanning device 5 and a third scanning device 6 at the same time.

Fig. 12 exemplarily shows the second scanning device 5. Referring to Fig. 12, in some embodiments, the second scanning device 5 includes a second radiation source 51, and further includes at least one of a second transmission detector 52 and a second backscatter detector 53 cooperating with the second radiation source 51. The second radiation source 51 and the first transmission detector 42 are arranged on the same of the movable carrier 1 and the bearing device 2, the second transmission detector 52 and the first radiation source 41 are arranged on the same of the movable carrier 1 and the bearing device 2, and the second backscatter detector 53 and the first radiation source 41 are arranged on the same of the movable carrier 1 and the bearing device 2. In this way, the second radiation source 51 and the first radiation source 41 are arranged on both sides of the same inspection passage 26, and the second radiation source 51 may cooperate with the second transmission detector 52 and the second backscatter detector 53 respectively to perform transmission scanning and backscatter scanning on the other side of the object to be inspected, so that transmission scanning and backscatter scanning may be performed on both sides of the object to be inspected, which is convenient to obtain a more comprehensive and accurate detection result.

Figs. 13 and 14 exemplarily show the third scanning device 6. Referring to Figs. 13 and 14, in some embodiments, the third scanning device 6 is arranged on the bearing device 2, and includes a third radiation source 61 and a third backscatter detector 62 cooperating with each other, and the third radiation source 61 and the third backscatter detector 62 are located below the object to be inspected during the process of scanning and detecting the object to be inspected by the third scanning device 6. In this way, the third scanning device 6 may perform backscatter scanning on the object to be inspected from a bottom perspective, which is convenient to obtain a more comprehensive and accurate detection result.

It is to be noted that, when the scanning system 3 includes a first scanning device 4, a second scanning device 5 and a third scanning device 6 at the same time, the first scanning device 4, the second scanning device 5 and the third scanning device 6 may perform scanning sequentially according to a time sequence, so as to avoid signal crosstalk to the first backscatter detector 46, the second backscatter detector 53 and the third backscatter detector 62. In addition, the first scanning device 4, the second scanning device 5, and the third scanning device 6 may be provided so that the radiation beam planes of the first radiation source 41, the second radiation source 51, and the third radiation source 61 are not coplanar with each other.

In the aforementioned embodiments, the number of the bearing devices 2 is not limited, and may be one, two or more. For example, referring to Fig. 15, in some embodiments, the security inspection system 10 includes two bearing devices 2 and two scanning systems 3. After the two bearing devices 2 are detached from the movable carrier 1, the two bearing devices 2 are arranged on the two opposite sides of the movable carrier 1 in the first direction W, so that inspection passages 26 are provided on the two opposite sides of the movable carrier 1 in the first direction W, and the two scanning systems 3 are in one-to-one correspondence with the two bearing devices 2. In this way, the security inspection system 10 may be a dual-passage security inspection system, which may perform security inspection on different objects to be inspected at the same time, so that it is possible to effectively improve the efficiency.

Wherein, at least one of the two bearing devices 2 may be connected to the movable carrier 1 through the connection device 8 after it is detached from the movable carrier 1. In other words, only one of the two bearing devices 2 may be connected to the movable carrier 1 through the connection device 8, or the two bearing devices 2 may also be both connected to the movable carrier 1 through the connection device 8. When the two bearing devices 2 are both connected with the movable carrier 1 through the connection device 8, the two bearing devices 2 and the movable carrier 1 may be accurately positioned, so as to obtain a more accurate detection result. Wherein, in the case where the two bearing devices 2 are both connected to the movable carrier 1 through the connection device 8 after they are detached from the movable carrier 1, the two connection devices 8 connected to the two bearing devices 2 respectively may be opposite to each other, or may also be staggered along the second direction L of the movable carrier 1.

Next, the embodiments shown in Figs. 1 to 15 would be further introduced.

First, the first embodiment shown in Figs. 1 to 10 would be introduced.

As shown in Figs. 1 to 10, in this first embodiment, the security inspection system 10 includes a movable carrier 1, a first radiation source 41, a first backscatter detector 46, a bearing device 2, a first transmission detector 42, a leg 23, a support 24 and a connection device 8. The first radiation source 41 and the first backscatter detector 46 are both fixed on the movable carrier 1. The bearing device 2 is detachably arranged on the movable carrier 1. The first transmission detector 42, the leg 23, the support 24 and the connection device 8 are all arranged on the bearing device 2, and the support 24 and the connection device 8 are both detachably connected with the bearing device 2.

Specifically, as shown in Figs. 1 to 3, in this embodiment, the movable carrier 1 is a vehicle including a tractor 11 and a semi-trailer 12. The tractor 11 includes a cab, and the portion of the tractor 11 located at the rear side of the cab is provided with a shield compartment 7. The semi-trailer 12 is detachably connected to the back of the tractor 11, so that the tractor 11 when traveling may drive the semi-trailer 12 to move together. It may be understood that, "front" and "rear" are defined based on the traveling direction of the movable carrier 1, "front" is the forward direction of the movable carrier 1, and "rear" is the backward direction of the movable carrier 1. The forward and backward directions thus defined conform to the second direction L of the movable carrier 1. On this basis, the first direction W of the movable carrier 1 conforms to the left-right direction.

As shown in Fig. 5, in this embodiment, the first radiation source 41 and the first backscatter detector 46 are both arranged on the tractor 11, so that the first radiation source 41 and the first backscatter detector 46 may both move together with the movable carrier 1 and flexibly transfer between different places. Furthermore, it may be known in conjunction with Figs. 4 and 5 that, in this embodiment, the first radiation source 41 and the first backscatter detector 46 are specifically arranged in the shield compartment 7 on the tractor 11, so that the shield compartment 7 may shield the radiation emitted by the first radiation source 41 to a certain extent, so as to reduce the influence of the radiation on the staff around, and improve the working safety of the security inspection system 10. The first backscatter detector 46 is arranged on one side of the first radiation source 41 proximate to the edge of the tractor 11 in the first direction, and configured to receive the radiation emitted by the first radiation source 41 and reflected by the object to be inspected, so as to realize backscatter scanning on the object to be inspected. In this embodiment, the first radiation source 41 may be an accelerator, an isotope source or an X-ray machine.

As shown in Figs. 1 to 10, in this embodiment, the bearing device 2 is detachably arranged on the semi-trailer 12, so that on the one hand, the bearing device 2 as well as the first transmission detector 42, the leg 23, the support 24 and the connection device 8 on the bearing device 2 may move together with the movable carrier 1 and flexibly transfer between different places, and on the other hand, after arriving at the inspection site, the bearing device 2 may leave the movable carrier 1, and is arranged on one side of the movable carrier 1 along the first direction W, so that the first transmission detector 42 may cooperate with the first radiation source 41 to perform transmission scanning on the object to be inspected.

As shown in Figs. 1 to 4, in this embodiment, the bearing device 2 includes a base 21 and four ramps 22. The four ramps 22 are divided into two groups arranged on both sides of the base 21 along the second direction L of the movable carrier 1. Each group of ramps 22 includes two ramps 22. The two ramps 22 in the same group of ramps 22 are located on the same side of the base 21 along the second direction L of the movable carrier 1 and arranged at intervals along the first direction W of the movable carrier 1. The ramps 22 on both sides of the base 21 in the second direction L of the movable carrier 1 are opposite to each other in pairs. Each ramp 22 is rotatably connected to the base 21, so that each ramp 22 may rotate between a vertical position shown by a dotted line in Fig. 4 and a horizontal position shown by a solid line. When the ramp 22 is in the vertical position, the ramp 22 is in a retracted state. When the ramp 22 is in the lateral position, the ramp 22 is in a deployed state. During the transit transport process, all the ramps 22 are in a retracted state, so that the bearing device 2 is roughly cubic during the transport process, which is convenient for transport. After arriving at the inspection site, and the bearing device 2 is arranged in place on one side of the movable carrier 1 along the first direction W, all the ramps 22 are switched to a deployed state, so that the whole bearing device 2 forms an inspection passage 26 through which the object to be inspected passes. In this embodiment, the object to be inspected is a vehicle, which is referred to as the inspected movable carrier. During the inspection process, the inspected movable carrier is guided by the ramp 22 on one side to travel to the base 21, and guided by the ramp 22 on the other side to leave the base 21.

As shown in Figs. 4 and 10, in this embodiment, the first transmission detector 42 includes a first transmission detection portion 43 arranged on the base 21 and rotatable between a horizontal position shown by a dotted line in Fig. 10 and a vertical position shown by a solid line in Fig. 10. When the first transmission detector 42 is in a horizontal position, the first transmission detection portion 43 is in a retracted state. When the first transmission detection portion 43 is in a vertical position, the first transmission detection portion 43 is in a deployed state. During the transit transport process, the first transmission detection portion 43 is in a retracted state to facilitate the transport. During the detection process, the first transmission detection portion 43 is switched to a deployed state to receive the radiation emitted from the first radiation source 41 and passing through the object to be inspected so as to realize the transmission scanning of the object to be inspected. Furthermore, as shown in Fig. 4, in this embodiment, the base 21 is further provided with a baffle plate 27 located on one side of the first transmission detection portion 43 remote from the movable carrier 1, for blocking the first transmission detection portion 43 and preventing the first transmission detection portion 43 from tilting outward. In addition, the baffle plate 27 may be formed of lead, steel and the like, for eliminating or reducing the leakage of the radiation transmitted through the first transmission detection portion 43. In order to clearly show the structure, in Figs. 4, 7, 9 and 10, the baffle plate 27 uses a perspective drawing.

As may be known from Fig. 10, in this embodiment, the first transmission detection portion 43 includes a detection arm and a detector array arranged on the detection arm. Specifically, in this embodiment, the detection arm includes two detection arm joints, and the detector array includes two detector units arranged on the two detection arm joints respectively to form two detection sections 44 each including detection arm joints and transmission detector units arranged on the detection arms. Wherein, one detection section 44 has a long length, and its detection arm joint is rotatably connected to the base 21 to realize a rotatable connection between the first transmission detection portion 43 and the bearing device 2. The other detection section 44 has a short length, and its detection arm joint is rotatably connected to an extremity of the detection arm joint of the long detection section 44, so that the short detection section 44 may rotate relative to the long detection section 44 for folding and unfolding. The length of the first transmission detection portion 43 is changed to adapt to the detection requirements of the object to be inspected with different heights. When the short detection section 44 is folded as shown by a dotted line in Fig. 10, the length of the first transmission detection portion 43 is short, which may meet the detection requirements of the object to be inspected with a low height. When the short detection section 44 is unfolded as shown by a solid line in Fig. 10, the length of the first transmission detection portion 43 is long, which may meet the detection requirements of the object to be inspected with a high height.

Returning to Fig. 2, in this embodiment, legs 23 are provided on the bearing device 2 for supporting the bearing device 2 during the process of detaching the bearing device 2 from the movable carrier 1. As shown in Fig. 1, during the transit transport process, the legs 23 are in a contracted state and are not supported on the ground. As shown in Fig. 2, when the bearing device 2 needs to leave the movable carrier 1 when it arrives at the inspection site, the legs 23 are extended and contact with the ground to support the bearing device 2, so that as shown in Fig. 3, the movable carrier 1 is driven away to allow that the bearing device 2 may leave the semi-trailer 12 to realize that the bearing device 2 is detached from the movable carrier 1. In this way, the bearing device 2 has a spontaneous loading and unloading function, which is simple and convenient. Moreover, since the length of the leg 23 may be adjusted, leveling may also be performed to flexibly adapt to different ground conditions during the process of detaching the bearing device 2 from the movable carrier 1. During the actual detection process, the legs 23 may be retracted or removed.

As shown in Fig. 7, in this embodiment, the support 24 is configured to support the bearing device 2 during the process of transferring to a target position after leaving the movable carrier 1, so as to facilitate the bearing device 2 to reach the target position quickly. As may be known from Fig. 7, in this embodiment, wheels 25 are provided at the bottom end of the support 24, which may reduce the movement resistance and further facilitate the transfer of the bearing device 2 to the target position. Moreover, as shown in Fig. 9, the support 24 is also configured to support the bearing device 2 during the process of connecting the movable carrier 1 with the bearing device 2 by the connection device 8, so as to facilitate the implementation of a corresponding connection process. At the same time, it may be known in conjunction with Figs. 9 and 10 that, in this embodiment, the support 24 which is detachably connected with the bearing device 2, is mounted on the bearing device 2 only during the process of transferring the bearing device 2 to a target position until the connection device 8 is connected, and removed from the bearing device 2 after the connection device 8 connects the bearing device 2 with the movable carrier 1, so that the bearing device 2 may land to facilitate the object to be inspected to ascend and descend. In addition, during the transit transport process, the support 24 may also be removed from the bearing device 2 and placed on the movable carrier 1, or still placed on the bearing device 2, but not supported on the movable carrier 1.

The connection device 8 is configured to connect the movable carrier 1 with the bearing device 2 arranged on one side of the movable carrier 1 in the first direction W. As shown in Figs. 4 and 5, in this embodiment, the connection device 8 includes two connecting rods 85 and a cross bar 84. The two connecting rods 85 serve as the first connector 81 and the second connector 82 respectively, which are arranged at intervals along the second direction L of the movable carrier 1 and both extend along the first direction W of the movable carrier 1. The cross bar 84 serves as a third connector 83 extending along the second direction L of the movable carrier 1 and connected between the two connecting rods 85, so that the connection device 8 is H-shaped. When the bearing device 2 is connected with the movable carrier 1, one connecting rod 85 connects a first point of the movable carrier 1 and the bearing device 2, and the other connecting rod 85 connects a second point of the movable carrier 1 and the bearing device 2, so that the first radiation source 41 located on the movable carrier 1 and the first transmission detection portion 43 located on the bearing device 2 are coplanar with each other, so as to obtain an accurate transmission detection image. It is to be noted that, the first point and the second point are the above-described predetermined connection positions.

As shown in Fig. 8, in this embodiment, the two connecting rods 85 are straight rods and cannot be extended. At this time, the length of the connection device 8 may not be adjusted, and after connection by the connection device 8, the distance between the movable carrier 1 and the bearing device 2 is constant, and cannot be changed again.

In this embodiment, the connection device 8 is placed on the bearing device 2 during the transit transport process, and removed from the bearing device 2 only when it is necessary to connect the bearing device 2 with the movable carrier 1, so that the bearing device 2 is connected with the movable carrier 1.

It may be seen that, the security inspection system 10 of this embodiment may realize the backscatter and transmission scanning process of a side perspective, and may conveniently transit and realize the rapid and accurate deployment of the inspection site.

Figs. 1 to 3 show the transit process of the security inspection system 10 in this embodiment.

As shown in Fig. 1, when it is necessary to transfer to the detection site, the bearing device 2 with the first transmission detection portion 43, the leg 23, the support 24 and the connection device 8 is fixed on the semi-trailer 12, and then the movable carrier 1 is started to arrive at the detection site. Then, as shown in Fig. 2, the legs 23 is extended and supported on the ground to support the bearing device 2 with the first transmission detection portion 43, the support 24 and the connection device 8, so that the bearing device 2 is located at a certain distance above the semi-trailer 12. Then, as shown in Fig. 3, the movable carrier 1 is started, so that the movable carrier 1 travels in the direction that the tractor 11 is away from the bearing device 2, and the bearing device 2 leaves the movable carrier 1. In this way, it is possible to conveniently complete the transition and the detaching of the bearing device 2 from the movable carrier 1 after arriving at the inspection site.

After the bearing device 2 is detached from the movable carrier 1, it is necessary to position the bearing device 2 and the movable carrier 1. Figs. 8 to 10 show a corresponding positioning process.

As shown in Fig. 8, after the bearing device 2 is detached from the movable carrier 1, the first ends of the two connecting rods 85 of the connection device 8 are fixed to the movable carrier 1, and specifically fixed to the tractor 11 of the movable carrier 1 by jack screws or the like. Then, as shown in Fig. 9, the second ends of the two connecting rods 85 are fixed to the bearing device 2 pushed to the other side of the connection device 8 and specifically fixed to the base 21 of the bearing device 2 by jack screws. In a corresponding process, the support 24 supports the bearing device 2 and contacts with the ground through the wheels 25. After the connection is completed, the first radiation source 41 on the tractor 11 is coplanar with the first transmission detection portion 43. After that, all the ramps 22 of the bearing device 2 are rotated to a transverse position, and the support 24 is removed so that the height of the bearing device 2 is reduced, and the base 21 and all the ramps 22 fall to the ground. Then, as shown in Fig. 10, the first transmission detection portion 43 is rotated from the horizontal position to the vertical position, and the short detection section 44 is rotated to the vertical position, so that the first transmission detection portion 43 is deployed. In this way, the site arrangement of the security inspection system 10 is completed.

After the site arrangement of the security inspection system 10 is completed, the first radiation source 41, the first backscatter detector 46 and the first transmission detection portion 43 are deployed, and the object to be inspected passes through the bearing device 2, so that the security inspection of the object to be inspected may be completed.

It may be seen that, the security inspection system 10 of this embodiment has a simple structure, which is convenient in use with high detection accuracy.

Next, several additional embodiments shown in Figs. 11 to 15 will be introduced. In order to simplify the description, when several embodiments shown in Figs. 11 to 15 are introduced, only the description of the differences from the first embodiment will be focused, and other aspects that have not been described may be understood with reference to the first embodiment.

First, the second embodiment shown in Fig. 11 will be introduced.

As shown in Fig. 11, the second embodiment is different from the first embodiment mainly in that, in this second embodiment, the first transmission detector 42 does not only include the first transmission detection portion 43, but also includes the second transmission detection portion 45. The second transmission detection portion 45 is non-rotatable, and arranged on the base 21 substantially parallel to the base 21, for cooperating with the first radiation source 41 to perform transmission scanning during the detection process. After the connection device 8 connects the tractor 11 with the base 21, the first transmission detection portion 43 and the second transmission detecting part 45 are both coplanar with the first radiation source 41.

It may be seen that, the security inspection system 10 of this embodiment, which may still conveniently transit and deploy quickly and accurately on the detection site, may not only realize the backscatter and transmission scanning processes, but also obtain transmission scanning images at different angles, which is conducive to further improving the accuracy of an examination result.

Next, a third embodiment shown in Fig. 12 will be introduced.

As shown in Fig. 12, the third embodiment is different from the first embodiment mainly in that, in this third embodiment, the security inspection system 10 includes not only a first scanning device 4 consisting of a first radiation source 41, a first backscatter detector 46 and a first transmission detector 42, but also a second scanning device 5 at the same time. The second scanning device 5 includes a second radiation source 51, a second backscatter detector 53 and a second transmission detector 52. The second radiation source 51 and the second backscatter detector 53 are arranged on the bearing device 2 together with the first transmission detector 42, and the second backscatter detector 53 is arranged on one side of the second radiation source 51 proximate to the movable carrier 1. The second transmission detector 52 is arranged on the tractor 11 together with the first radiation source 41 and the first backscatter detector 46. The second backscatter detector 53 and the second transmission detector 52 cooperate with the second radiation source 51 to perform backscatter scanning and transmission scanning. In this way, under the joint action of the first scanning device 4 and the second scanning device 5, the security inspection system 10 may perform backscatter scanning on the object to be inspected from both sides, and perform transmission scanning on the object to be inspected from both sides, which is conductive to improving the work flexibility and improving the accuracy of an examination result.

As may be known from Fig. 12, in this embodiment, the second scanning device 5 and the first scanning device 4 are arranged side by side in the second direction L of the movable carrier 1. The second backscatter detector 53 and the first transmission detector 42 may include detection arms respectively. Alternatively, the second backscatter detector 53 may share a detection arm with the first transmission detector 42, and both of them may be arranged at intervals on the same detection arm along the second direction L of the movable carrier 1. Similarly, the second transmission detector 52 and the first backscatter detector 46 may include detection arms respectively. Alternatively, the second transmission detector 52 may share a detection arm with the first backscatter detector 46, and both of them may be arranged at intervals on the same detection arm along the second direction L of the movable carrier 1.

In addition, as shown in Fig. 12, the third embodiment is different from the first embodiment mainly in that, in this third embodiment, the first connector 81 and the second connector 82 of the connection device 8 are no longer non-telescopic connecting rods 85, but become automatically telescopic hydraulic rods 88. In this way, the connection device 8 is no longer telescopic, but becomes telescopic, so as to flexibly adapt to the detection requirements of the detection objects with different widths.

Next, the fourth embodiment shown in Figs. 13 to 14 will be introduced.

As shown in Figs. 13 and 14, the fourth embodiment is different from the first embodiment mainly in that, in this fourth embodiment, the security inspection system 10 includes not only the first scanning device 4 consisting of the first radiation source 41, the first backscatter detector 46 and the first transmission detector 42, but also the third scanning device 6 at the same time. The third scanning device 6 is arranged on the bearing device 2, and specifically located in the base 21. Wherein, the third scanning device 6 includes a third radiation source 61 and a third backscatter detector 62. The third radiation source 61 and the third backscatter detector 62 are both arranged in the base 21, and the third radiation source 61 is located below the third backscatter detector 62. In this way, the third scanning device 6 may perform backscatter scanning on the object to be inspected from a bottom perspective, so that the security inspection system 10 may not only realize the backscatter and transmission scanning process from a side perspective, but also realize the backscatter scanning process from a bottom perspective, which is conductive to further improving the accuracy of an examination result.

It is to be noted that, the third scanning device 6 of this fourth embodiment may also be applied to the embodiment shown in Fig. 11 or 12. For example, when the third scanning device 6 is arranged in the embodiment shown in Fig. 12, the first scanning device 4, the second scanning device 5 and the third scanning device 6 may perform three-sided backscatter scanning and two-sided transmission scanning on the object to be inspected, so as to obtain a more omni-directional scanned image.

Next, a fifth embodiment shown in Fig. 15 will be introduced.

As shown in Fig. 15, the fifth embodiment is different from the first embodiment mainly in that, in this fifth embodiment, the security inspection system 10 no longer includes only one bearing device 2 and one first scanning device 4, but includes two bearing devices 2 and two first scanning devices 4. During the detection process, the two bearing devices 2 are arranged on the two opposite sides of the movable carrier 1 in the first direction W, and connected to the movable carrier 1 by the two connection devices 8 respectively. The two connection devices 8 are opposite to each other. In this way, an inspection passage 26 is provided on both sides of the movable carrier 1 in the first direction W, so that it is possible to perform security inspection on the two objects to be inspected at the same time, with a higher efficiency.

In addition, as shown in Fig. 15, the fifth embodiment is also different from the first embodiment in that, in this fifth embodiment, the first connector 81 and the second connector 82 of the connection device 8 are no longer non-telescopic connecting rods 85, but become manually telescopic threaded telescopic rods 89. In this way, the connection device 8 is no longer non-telescopic, but becomes telescopic, so as to flexibly adapt to the detection requirements of the detection objects with different widths.

It is to be noted that, although Fig. 15 only shows the first scanning device 4, in fact, the aforementioned second scanning device 5 and third scanning device 6 may also be applied to this fifth embodiment. For example, the two bearing devices 2 may be both equipped with the second scanning device 5 and third scanning device 6, so that three-sided backscatter scanning and two-sided transmission scanning may be realized at the two inspection passages 26.

The above descriptions which are only the exemplary embodiments of the present disclosure, do not serve to limit the present disclosure. Any amendment, equivalent replacement, improvement, and the like made within the spirit and principles of the present disclosure should all be contained within the protection scope of the present disclosure.

## Claims

1. A security inspection system (10), comprising:
a movable carrier (1);
a bearing device (2) detachably arranged on the movable carrier (1) and arranged on one side of the movable carrier (1) in the first direction (w) after the bearing device (2) is detached from the movable carrier (1), so that an inspection passage (26) through which an object to be inspected passes is arranged on one side of the movable carrier (1);
a scanning system (3) configured to scan and detect the object passing through the inspection passage (26), and comprising a first scanning device (4), wherein the first scanning device (4) comprises a first radiation source (41) and a first transmission detector (42) cooperating with each other, one of the first radiation source (41) and the first transmission detector (42) is arranged on the movable carrier (1), and the other is arranged on the bearing device (2); and
a connection device (8) configured to connect the movable carrier (1) and the bearing device (2) arranged on one side of the movable carrier (1) in a first direction (W) after the bearing device (2) is detached from the movable carrier (1), so that the first radiation source (41) and the first transmission detector (42) are coplanar with each other.

2. The security inspection system (10) according to claim 1, wherein the connection device (8) comprises a first connector (81) and a second connector (82) arranged side by side and both connecting the bearing device (2) with the movable carrier (1).

3. The security inspection system (10) according to claim 2, wherein the first connector (81) and the second connector (82) are telescopic.

4. The security inspection system (10) according to claim 3, wherein the first connector (81) and/or the second connector (82) comprise(s) an automatic telescopic member (86) or a manual telescopic member (87).

5. The security inspection system (10) according to claim 4, wherein the first connector (81) and/or the second connector (82) comprise(s) a hydraulic rod (88) or a threaded telescopic rod (89).

6. The security inspection system (10) according to any one of claims 2 to 5, wherein the connection device (8) comprises a third connector (83) connected between the first connector (81) and the second connector (82).

7. The security inspection system (10) according to claim 6, wherein the third connector (83) comprises a cross bar (84) connected between the first connector (81) and the second connector (82) so that the connection device (8) is H-shaped.

8. The security inspection system (10) according to any one of claims 1 to 7, wherein the connection device (8) is detachably arranged on the bearing device (2) or the movable carrier (1).

9. The security inspection system (10) according to any one of claims 1 to 8, wherein the first transmission detector (42) comprises at least one of a first transmission detection portion (43) and a second transmission detection portion (45), the first transmission detection portion (43) is located on the other side of the object to be inspected opposite to the radiation source (41) during the process of scanning and detecting the object to be inspected by the first scanning device (4), and the second transmission detection portion (45) is located below the object to be inspected during the process of scanning and detecting the object to be inspected by the first scanning device (4).

10. The security inspection system (10) according to claim 9, wherein the first transmission detection portion (43) is rotatably provided, so that the first transmission detection portion (43) has a deployed state and a retracted state, such that when in the deployed state, the first transmission detection portion (43) is located on the other side of the object to be inspected opposite to the first radiation source (41); and/or the length of the first transmission detection portion (43) is adjustable.

11. The security inspection system (10) according to claim 10, wherein the first transmission detection portion (43) comprises at least two detection sections (44) telescopically or foldably connected so that the length of the first transmission detection portion (43) is adjustable.

12. The security inspection system (10) according to any one of claims 1 to 11, wherein the bearing device (2) comprises a base (21) and a ramp (22), the first radiation source (41) or the first transmission detector (42), when arranged on the bearing device (2), is arranged on the base (21), the ramp (22) is arranged on the edge of the base (21) along a second direction (L) of the movable carrier (1) to guide the object to be inspected to ascend and descend the base (21), where the second direction (L) is perpendicular to the first direction (W).

13. The security inspection system (10) according to claim 12, wherein the ramp (22) is rotatably arranged on the base (21) so that the ramp (22) has a deployed state and a retracted state.

14. The security inspection system (10) according to claim 12 or 13, wherein the ramps (22) are provided on the two opposite sides of the base (21) along the second direction (L) of the movable carrier (1); and/or the at least two ramps (22) are provided on one side of the base (21) along the second direction (L) of the movable carrier (1).

15. The security inspection system (10) according to any one of claims 1 to 14, wherein the bearing device (2) is provided with a leg (23) extended and supported on the ground to raise the bearing device (2) in the case that the bearing device (2) is required to be detached from the movable carrier (1); and/or the bearing device (2) is provided with a support (24), so that wheels (25) for contacting with the ground are arranged at the bottom of the support (24).

16. The security inspection system (10) according to claim 15, wherein the support (24) is detachably connected with the bearing device (2).

17. The security inspection system (10) according to any one of claims 1 to 16, wherein the first scanning device (4) comprises a first backscatter detector (46) cooperating with the first radiation source (41), and the first backscatter detector (46) and the first radiation source (41) are arranged on the same of the movable carrier (1) and the bearing device (2).

18. The security inspection system (10) according to any one of claims 1 to 17, wherein the scanning system (3) comprises a second scanning device (5) comprising a second radiation source (51) and further comprising at least one of a second transmission detector (52) and a second backscatter detector (53) cooperating with the second radiation source (51), the second radiation source (51) and the first transmission detector (42) are arranged on the same of the movable carrier (1) and the bearing device (2), the second transmission detector (52) and the first radiation source (41) are arranged on the same of the movable carrier (1) and the bearing device (2), and the second backscatter detector (53) and the first transmission detector (42) are arranged on the same of the movable carrier (1) and the bearing device (2); and/or, the scanning system (3) comprises a third scanning device (6) arranged on the bearing device (2) and comprising a third radiation source (61) and a third backscatter detector (62) cooperating with each other, wherein the third radiation source (61) and the third backscatter detector (62) are located below the object to be inspected during the process of scanning and detecting the object to be inspected by the third scanning device (6).

19. The security inspection system (10) according to any one of claims 1 to 18, wherein the security inspection system (10) comprises the two bearing devices (2) and the two scanning systems (3), the two bearing devices (2) are arranged on the two opposite sides of the movable carrier (1) in the first direction (W) after the two bearing devices (2) are detached from the movable carrier (1), so that the inspection passages (26) are provided on the two opposite sides of the movable carrier (1) in the first direction (W), the two scanning systems (3) are in one-to-one correspondence with the two bearing devices (2), and at least one of the two bearing devices (2) is connected with the movable carrier (1) through the connection device (8) after it is detached from the movable carrier (1).

20. The security inspection system (10) according to claim 19, wherein after the two bearing devices (2) are detached from the movable carrier (1), the two bearing devices (2) are both connected with the movable carrier (1) through the two connection devices (8), and the two connection devices (8) connected with the two bearing devices (2) respectively are opposite to each other or staggered along the second direction (L) of the movable carrier (1) perpendicular to the first direction (W).
